# EUROPEAN PATENT APPLICATION

(11) **EP 4 738 462 A1**
(43) Date of publication of application: **06.05.2026**
(21) Application number: 25204165.2
(22) Date of filing: 23.09.2025
(51) Int. Cl.: H01M 4/36, H01M 4/38

(54) **ANODE MATERIAL AND BATTERY**

(30) Priority: 29.10.2024 CN 202411524433
(71) Applicant: BTR New Material Group Co., Ltd., Shenzhen, Guangdong 518106 (CN)
(72) Inventor: CHEN, Xi, Shenzhen, 518106 (CN); PANG, Chunlei, Shenzhen, 518106 (CN); HE, Peng, Shenzhen, 518106 (CN); REN, Jianguo, Shenzhen, 518106 (CN); HUANG, Youyuan, Shenzhen, 518106 (CN); HE, Xueqin, Shenzhen, 518106 (CN)
(74) Representative: Cleveland Scott York

(57) **Abstract**

The technical field relates to anode materials, an anode material and a battery being provided. The anode material includes a matrix material and a silicon material, and at least some of the silicon material is present in the matrix material, where the silicon material involves a first phase and a second phase, where the anode material is measured by a precession electron diffraction method that: based on a region with the silicon material present, a region with the silicon material in the first phase present has an area proportion A of A ≥70%, and a region with the silicon material in the second phase present has an area proportion B of 0<B≤30%. The anode material have low expansion, high capacity and excellent cycle performance.

## Description

### TECHNICAL FIELD

The present disclosure relates to the technical field of an anode material, in particular to an anode material and a battery.

### BACKGROUND

Lithium-ion batteries have the advantages of high energy density, long service life, no environmental pollution, and the like, and have been widely applied in the field of 3C. With the development of the market, the lithium-ion battery is not only widely applied in mobile devices, such as smart phones and portable computers, but also in the field of large-scale devices, such as electric vehicles and electric tools. In order to improve energy density of the battery, the research and development of a silicon-based anode material become increasingly mature. The silicon-based material has a large volume expansion during charging and discharging, which tends to cause particles to pulverize and then spall from current collector. In addition, the volume of the silicon-based material varies repeatedly during electrochemical cycling, so that solid electrolyte membrane formed on surface of the silicon-based material is continuously damaged and regenerated, resulting in continuous consumption of lithium ions, which affects stability of the silicon-based material. The battery capacity is rapidly reduced during a long cycling.

Therefore, there is an urgent problem to be solved at present, namely how to improve the volume expansion of the silicon-based anode material, and enhance structural stability and cycle stability of the anode material.

### SUMMARY

In some embodiments, an anode material and a battery are provided, where volume expansion of the anode material is improved, and structural stability and cycle stability of the anode material are both enhanced.

In a first aspect, an anode material is provided. The anode material includes a matrix material and a silicon material, and at least some of the silicon material is present in the matrix material, where the silicon material involves a first phase and a second phase;
where the anode material is measured by a precession electron diffraction method that:
based on a region with the silicon material present, a region with the silicon material in the first phase present has an area proportion A of A ≥70%, and a region with the silicon material in the second phase present has an area proportion B of 0<B≤30%.

In some embodiments, the matrix material has pores, and at least some of the silicon material is present in the pores of the matrix material.

In some embodiments, an anode material with the silicon material removed has micropores, where the micropores have a pore volume proportion of ≥80%.

In some embodiments, an anode material with the silicon material removed has mesopores, where the mesopores have a pore volume proportion of ≤20%.

In some embodiments, an anode material with the silicon material removed has macropores, where the macropores have a pore volume proportion of ≤1%.

In some embodiments, the anode material with the silicon material removed has a total pore volume of 0.4 cm³/g to 1.5 cm³/g.

In some embodiments, the anode material with the silicon material removed has a specific surface area of 200 m²/g to 3000 m²/g;
In some embodiments, in the anode material with the silicon material removed, pores with a pore size of 5 nm or less have a pore volume proportion of ≥90%.

In some embodiments, the matrix material includes a carbon matrix, and the carbon matrix includes one or more of artificial graphite, natural graphite, amorphous carbon, activated carbon, mesocarbon microbeads, carbon nanotubes, carbon nanofibers, and graphene.

In some embodiments, the matrix material includes a non-carbon matrix, and the non-carbon matrix includes at least one of a metal oxide, a silicide, a silicate, a phosphate, a titanate, and an aluminum borate.

In some embodiments, in an XRD pattern of the anode material, the anode material has a diffraction peak at 28.4°±0.5°, and the silicon material has a grain size c of ≤1 nm.

In some embodiments, the anode material has a total pore volume of 0.001 cm³/g to 0.1 cm³/g.

In some embodiments, the pores of the anode material have a mean pore size of 0.4 nm to 50 nm.

In some embodiments, the anode material contains micropores, where the micropores have a pore volume proportion of ≤10%.

In some embodiments, the anode material contains mesopores, where the mesopores have a pore volume proportion of ≥80%.

In some embodiments, the anode material contains macropores, where the macropores have a pore volume proportion of ≤20%.

In some embodiments, an anode slurry prepared from the anode material has an average gas production of ≤1 mL/g for 1 day at 25°C.

In some embodiments, the anode material has a median particle size D₅₀ of 5 µm to 20 µm.

In some embodiments, the anode material has a particle size distribution satisfying 0.9≤(D₉₀-D₁₀)/D₅₀≤5.

In some embodiments, the anode material has a specific surface area of 0.5 m²/g to 10 m²/g.

In some embodiments, the anode material has a compaction density of 0.8 g/cm³ to 1.3 g/cm³.

In some embodiments, the anode material has a tap density of 0.5 g/cm³ to 1.5 g/cm³.

In some embodiments, the anode material has a powder conductivity of 0.1 S/cm to 2 S/cm under a pressure of 20 kN.

In some embodiments, the anode material contains silicon element accounting for a mass percentage of 20% to 60%.

In a second aspect, a battery is provided. The battery includes the anode material according to the first aspect.

The technical solution of the present disclosure preferably has at least the following beneficial effects:
In the anode material provided by the present disclosure, the silicon material is compounded with the matrix material, thus volume change of the silicon material is buffered by the matrix material. The matrix material also serves as a conductive network for maintaining good electronic conductivity inside the anode material. In the present disclosure, based on a region with the silicon material present, a region with the silicon material in the first phase present has an area proportion A of A ≥70%, and a region with the silicon material in the second phase present has an area proportion B of 0< B ≤30%. Due to a low volume expansion effect of the silicon material in the first phase during charging and discharging, the silicon material in the first phase has an isotropic volume expansion and the silicon material in the second phase has an anisotropic volume expansion during delithiation and lithiation. Thus, the silicon material in the first phase has better structural reversibility, and the silicon material in the first phase has better mechanical stability. In addition, the silicon material structure in the first phase has a critical crack size much larger than that of the silicon material in the second phase. The silicon material in the first phase has dangling bonds and voids, which enable it to withstand pulverization during cycling and to have lower lithiation energy barrier than that of the silicon material in the second phase. Thus, by controlling the proportions of the region with the silicon material in the first phase present and the region with the silicon material in the second phase present, the silicon material in the anode material is mainly in the first phase, so that the structural stability brought about by the silicon material in the first phase is more greatly utilized, allowing the anode material to have more stable capacity and lower expansion effect. Moreover, the matrix material with pores is adopted for further alleviating volume expansion of the silicon material, thus effectively alleviating the volume expansion of the silicon material during cycling, and reducing particle pulverization of the anode material. Therefore, cycle performance of the anode material is comprehensively improved.

### BRIEF DESCRIPTION OF DRAWINGS

FIG. 1 is a schematic diagram of a battery in discharging state provided by embodiments of the present disclosure.
FIG. 2a is a precession electron diffraction pattern of an anode material provided by Example 3 of the present disclosure.
FIG. 2b is a processed image of a precession electron diffraction pattern of an anode material provided by Example 3 of the present disclosure.

### DESCRIPTION OF EMBODIMENTS

The following describes this solution by embodiments, where the embodiments are exemplary, and are merely used to explain the present disclosure, and cannot be construed as a limitation on the present disclosure.

In a first aspect, the present disclosure provides an anode material, including a matrix material and a silicon material, and at least some of the silicon material is present in the matrix material, where the silicon material involves a first phase and a second phase;
where the anode material is measured by a precession electron diffraction method that:
based on a region with the silicon material present, a region with the silicon material in the first phase present has an area proportion A of A ≥70%, and a region with the silicon material in the second phase present has an area proportion B of 0< B ≤30%.

The first phase refers to a region where the grain size of Si (111) is ≤0.5 nm and does not correspond to the CIF (Crystallographic Information File) of crystalline Si in the XRD test. The second phase refers to a region where the grain size of Si (111) is > 0.5 nm and is fitted by the CIF of crystalline Si in the XRD test.

In the anode material provided by the present disclosure, the silicon material is compounded with the matrix material, thus volume change of the silicon material is buffered by the matrix material. The matrix material also serve as a conductive network for maintaining good electronic conductivity inside the anode material. In the present disclosure, based on a region with the silicon material present, a region with the silicon material in the first phase present has an area proportion A of A ≥70%, and a region with the silicon material in the second phase present has an area proportion B of 0< B ≤30%. Due to a low volume expansion effect of the silicon material in the first phase during charging and discharging, the silicon material in the first phase has an isotropic volume expansion and the silicon material in the second phase has an anisotropic volume expansion during delithiation and lithiation. Thus, the silicon material in the first phase has better structural reversibility, and the silicon material in the first phase has better mechanical stability. In addition, the silicon material structure in the first phase has a critical crack size much larger than that of the silicon material in the second phase. The silicon material in the first phase has dangling bonds and voids, which enable it to withstand pulverization during cycling and to have lower lithiation energy barrier than that of the silicon material in the second phase. Thus, by controlling the proportions of the region with the silicon material in the first phase present and the region with the silicon material in the second phase present, the silicon material in the anode material is mainly in the first phase, so that the structural stability brought about by the silicon material in the first phase is more greatly utilized, allowing the anode material to have more stable capacity and lower expansion effect. Moreover, the matrix material with pores is adopted for further alleviating volume expansion of the silicon material, thus effectively alleviating the volume expansion of the silicon material during cycling, and reducing particle pulverization of the anode material. Therefore, cycle performance of the anode material is comprehensively improved.

In some embodiments, the matrix material has pores, and at least some of the silicon material is present in the pores of the matrix material. The silicon material is compounded with the matrix material having pores, thus volume change of the silicon material is buffered by the matrix material. The matrix material also serve as a conductive network for maintaining good electronic conductivity inside the anode material.

In some embodiments, the matrix material includes a carbon matrix, and the carbon matrix includes one or more of artificial graphite, natural graphite, amorphous carbon, activated carbon, mesocarbon microbeads, carbon nanotubes, carbon nanofibers, and graphene.

The carbon matrix selecting the above materials serves as a supporting framework and also has good conductivity to ensure conductivity of the anode material.

In the present disclosure, taking the matrix material as a carbon matrix for example, under stirring, 10 g of the anode material was added drop wise with 150 mL of HF acid solution with a mass fraction of 20% to generate SiF₄ gas and H₂ gas and release heat. After no more gas was generated, a supernatant acidic solution was removed by centrifuging. Then the anode material was added with 150 mL of HF acid solution with a mass fraction of 20% again, stirred for 12 h, centrifuged again to remove a supernatant acidic solution, washed with pure water until neutral, and dried, to obtain the anode material with the silicon material removed, that is, the carbon matrix.

In some embodiments, the carbon matrix has at least one of micropores, mesopores, and macropores. According to the international general pore size range, the micropores refer to the pores with a pore size smaller than 2 nm, the mesopores refer to the pores with a pore size of 2 nm to 50 nm, and the macropores refer to the pores with a pore size larger than 50 nm.

In some embodiments, the anode material with the silicon material removed is the carbon matrix, in which the micropores have a pore volume proportion of ≥80%, the mesopores have a pore volume proportion of ≤20%, and the macropores have a pore volume proportion of ≤1%.

Specifically, the pore volume proportion of the micropores may be 80%, 85%, 89%, 90%, 92%, 95% or 98%, the pore volume proportion of the mesopores may be 20%, 18%, 17%, 15%, 14%, 12%, 10%, 8%, 6%, 5%, 2% or 1%, and the pore volume proportion of the macropores may be 1%, 0.8%, 0.7%, 0.5%, 0.3%, 0.2% or 0%. The volume proportions of the micropores, the mesopores, and the macropores in the carbon matrix are controlled within the above range, and the majority of the pores in the carbon matrix is the micropores, adjusting size of the silicon material formed by deposition, improving dispersion uniformity of the carbon matrix and the silicon material, improving volume expansion of the silicon material, and thus enhancing cycle stability of the anode material.

In some embodiments, the anode material with the silicon material removed has a total pore volume of 0.4 cm³/g to 1.5 cm³/g, which specifically may be 0.4 cm³/g, 0.5 cm³/g, 0.6 cm³/g, 0.8 cm³/g, 1.0 cm³/g, 1.3 cm³/g, 1.4 cm³/g, or 1.5 cm³/g, etc., or other value within the above range, which is not limited herein. The anode material with the silicon material removed is the carbon matrix. The carbon matrix is rich with pores, which accommodate the silicon material and reserve space for volume expansion of the accommodated silicon material. When the carbon matrix and the silicon material form a composite material, at least some of the silicon material is deposited in the pore of the carbon matrix. Thus, the formed composite material has a total pore volume less than that of the initial carbon matrix.

In some embodiments, the anode material with the silicon material removed has a mean pore size of 0.1 nm to 8 nm. For example, the mean pore size of the anode material with the silicon material removed may be 0.1 nm, 0.5 nm, 1 nm, 2 nm, 3 nm, 4 nm, 5 nm, 6 nm, 7 nm, 8 nm, or any value within a range of any two of the above values. The mean pore size of the anode material with the silicon material removed is controlled within the above range, indicating that the pores of the carbon matrix include the micropores with a higher volume proportion, and further include at least one or more of the mesopores and the macropores. The micropores in the carbon matrix reduce aggregation of the silicon material in the carbon matrix, and improve content and distribution uniformity of the silicon material in the carbon matrix, thus improving specific capacity and mechanical property of the obtained anode material. The mesopores or macropores with relatively larger pore size reserve sufficient buffer space for volume expansion of the silicon material, effectively alleviating the volume expansion of the silicon material, reducing the risk of cracking and pulverization of the anode material due to excessive local expansion stress caused by non-uniform volume change of the silicon material during cycling of the anode material, and facilitating improvement of structure stability and cycle stability of particles of the anode material.

In some embodiments, in the anode material with the silicon material removed, the pores with a pore size of 5 nm or less have a pore volume proportion of ≥90%. Specifically, the pores with a pore size of 5 nm or less have a pore volume proportion of 90%, 92%, 93%, 94%, 95%, 96%, 97%, 98% or 99%, etc. of all the pores, which is not limited herein. The pores of the carbon matrix are mainly composed of the pores with a pore size of 5 nm or less, and few the mesopores (> 5 nm) or the macropores with larger pore sizes, which facilitates the filling of the silicon material. The anode material filled with the silicon material is mainly composed of the mesopores and the macropores. Due to less proportions of the mesopores (> 5 nm) and the macropores in the carbon material, the pore volume formed by the mesopores and the macropores in the filled anode material is also very small. An appropriate total pore volume buffers volume expansion of the silicon during cycling of the anode material, but too large total pore volume will cause poor compactness of interior of the particle, and form position with weak stress. If these mesopores (> 5 nm) and macropores are exposed on the surface of the particle, they are difficult to be filled by a subsequent coating method, which increases a probability of electrolyte immersion.

The test methods of pore size and pore volume proportion are as follows: the pore volume of the carbon matrix refers to a total pore volume of the carbon matrix material per unit mass, which is measured by gas adsorption test. Nitrogen adsorption test is a technique that characterizes porosity and pore size distribution of a material by condensing a gas in pores of a solid. As pressure increases, the gas condenses firstly in the pores with the smallest diameter. As the pressure increases until reaching the saturation point, at which all pores are filled with liquid. The nitrogen pressure is then gradually reduced to evaporate the liquid from the system. Analysis of adsorption and desorption isotherms enables determination of pore volume and pore size distribution, as well as the proportions of each pore volume of the micropores, the mesopores, and the macropores in total pore volume.

In some embodiments, the anode material with the silicon material removed has a specific surface area of 200 m²/g to 3000 m²/g, which may be 300 m²/g, 500 m²/g, 800 m²/g, 1000 m²/g, 1500 m²/g, 2000 m²/g, 2500 m²/g or 3000 m²/g, etc., or other value within the above range, which is not limited herein. The anode material with the silicon material removed is the matrix. Controlling the specific surface area of the matrix within the above range facilitates uniform dispersion and stable attachment of the silicon material on the matrix, thereby facilitating reduction of the risk of the silicon material spalling from the matrix, thus improving stability and durability of the anode material.

In some embodiments, the matrix material includes a non-carbon matrix, and the non-carbon matrix includes at least one of a metal oxide, a silicide, a silicate, a phosphate, a titanate, and an aluminum borate.

In some embodiments, the metal oxide includes at least one of aluminum oxide, zirconium oxide, germanium dioxide, and manganese dioxide.

In some embodiments, the silicide includes at least one of silicon carbide and silicon nitride.

In some embodiments, the silicate includes at least one of cordierite, mullite, and zeolite.

In some embodiments, the phosphate includes at least one of aluminum phosphate, magnesium phosphate, calcium phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the titanate includes at least one of calcium titanate, iron titanate, lithium titanate, and barium titanate.

In some embodiments, in an XRD pattern of the anode material, the anode material has a diffraction peak at 28.4°±0.5°, and the silicon material has a grain size c of ≤1 nm. In the present disclosure, controlling the grain size of the silicon material to be 1 nm or less alleviates volume expansion of the silicon material during charging and discharging. The diffraction peak is a scattering peak of amorphous silicon, and the amorphous silicon has an isotropic expansion effect during lithiation, thus having better structural reversibility during charging and discharging. In addition, the amorphous silicon has better mechanical stability, enabling it to withstand pulverization during cycling. The anode material of the present application has more stable capacity and better stress alleviating mechanism.

In some embodiments, the anode material has a total pore volume of 0.001 cm³/g to 0.1 cm³/g, which may specifically be 0.001 cm³/g, 0.005 cm³/g, 0.006 cm³/g, 0.007 cm³/g, 0.01 cm³/g, 0.02 cm³/g, 0.03 cm³/g, 0.04 cm³/g, 0.05 cm³/g, 0.06 cm³/g, 0.08 cm³/g or 0.1 cm³/g, etc., or other value within the above range, which is not limited herein. After the matrix material is filled with the silicon material, the remaining pores reserve space for volume expansion of the silicon material, alleviating expansion effect of the anode material, improving cycle stability of the anode material, and adsorbing or accommodating an extremely small amount of gas generated by side reaction of some of the silicon material and electrolyte to improve gas production phenomenon of the anode material.

In some embodiments, the pores of the anode material have a mean pore size of 0.4 nm to 50 nm; which may specifically be 0.4 nm, 0.5 nm, 1 nm, 1.5 nm, 2 nm, 3 nm, 5 nm, 10 nm, 20 nm, 30 nm, 40 nm or 50 nm, etc., or other value within the above range, which is not limited herein. The pores of the anode material provide sufficient expansion buffer space for the silicon material, facilitating reducing particle pulverization phenomenon caused by volume expansion of the silicon material.

In some embodiments, the pores in the anode material include micropores, mesopores and macropores, and a ratio of a pore volume of the micropores and a pore volume of the mesopores is (1 to 50):(50 to 99), which specifically may be 1:99, 5:95, 10:90, 20:80, 30:65, 40:50 or 50:50, which is not limited herein. In the present disclosure, the pore volume proportion of the mesopores is increased, and the pore volume proportion of the micropores is reduced. Since a molecular size generated by electrolyte is generally smaller than or equal to the pore size of the micropores, under an action of strong capillary adsorption capacity of the micropores, adsorption capacity of the anode material is largely directly proportional to the pore volume of the micropores, (i.e., as the pore volume of the micropores increases, the adsorption capacity of the anode material increases), and thus a side reaction of the anode material and an electrolyte increases. Therefore, controlling the pore volume proportion of the micropores of the anode material reduces the active sites at which the side reaction of the anode material and the electrolyte occurs, and further reduces thickening of solid electrolyte membrane caused by continuous invasion of the electrolyte, facilitating improvement of cycle performance of the anode material. In addition, the mesopores with increased volume proportion reserve sufficient buffer space for volume expansion of the silicon material, which is beneficial for enhancing structure stability of particles of the anode material.

In some embodiments, with the total volume of the pores in the anode material taken as 100%, the anode material contains micropores, where the micropores have a pore volume proportion of ≤10%, which specifically may be 10%, 9%, 8%, 7%, 6%, 5%, 4%, 3% or 2%, etc., or other value within the above range, which is not limited herein. The pore volume proportion of the micropores is within the above range, indicating that most of the micropores in the matrix material have been effectively filled with the silicon material, and there are fewer micropores remaining in the obtained anode material. The silicon material filled in the micropores in the matrix material ensures structural compactness of the matrix material, so that the anode material does not collapse during compaction process of electrode preparation. Due to the uniform distribution and fully effective filling of the micropores in the matrix material, there are few residual micropores in the anode material, and the micropores on surface of the anode material are effectively filled with coating material. Therefore, the interior of the anode material is compact, increasing compressive capacity (compaction density) of the anode material, which is beneficial to maintaining the stability of the anode material during cycling. In addition, the filling of the micropores on the surface of the anode material reduces its specific surface area, which is beneficial to reducing a side reaction of the anode material.

In some embodiments, with the total volume of the pores in the anode material taken as 100%, the anode material contains mesopores, where the mesopores have a pore volume proportion of ≥80%, which specifically may be 80%, 82%, 85%, 87%, 90%, 93%, 95%, or 99%, etc., or other value within the above range, which is not limited herein. In some embodiments of the present disclosure, the pore volume proportion of the mesopores is determined by nitrogen desorption and absorption. The pore volume proportion of the mesopores of the anode material is defined within the above range, indicating that after the carbon matrix is filled with the silicon material, the micropores of the anode material are partially or completely filled, resulting in a conversion of the pore structure from the micropores being dominant to the mesopores being dominant. The pore structure change is attributed to the filling of a large number of micropores by the silicon material, which improve the conductivity, the capacity performance and the structural stability of the anode material.

In some embodiments, with the total volume of the pores in the anode material taken as 100%, the anode material contains macropores, where the macropores have a pore volume proportion of ≤20%, which specifically may be 20%, 18%, 15%, 12%, 10%, 8%, 7%, 5%, 4%, 3% or 2%, etc., or other value within the above range, which is not limited herein. The macropores with a small proportion in the anode material improve tap density and compaction density of the anode material, reducing problems of pulverization, cracking, etc. of the anode material during rolling process for preparing electrode plate, thus improving processability of the anode material. In addition, a relatively small proportion of the macropores in the anode material indicates a relatively low porosity of the anode material. The anode material with the relatively low porosity has a relatively high carbon content (taking the carbon matrix as an example herein), allowing the anode material to have a good electronic conductivity, providing a developed conductive network for the anode material, and improving conductivity of the anode material.

The volume proportions of the micropores, the mesopores and the macropores in the anode material are controlled within the above ranges, which improves uniformity of the distribution of the silicon material inside the anode material. Since the majority of the pores are the mesopores, the volume expansion of the silicon material is effectively alleviated, and cracking and pulverization of the anode material due to excessive local expansion stress caused by non-uniform volume change of the silicon material are reduced during cycling of the anode material, thereby improving the cycle stability of the anode material.

In some embodiments, the pores of the anode material have a mean pore size of 0.45 nm to 50 nm, or 0.5 nm to 30 nm, or 1 nm to 15 nm, which exemplarily may be 0.45 nm, 0.5 nm, 1 nm, 2 nm, 3 nm, 4 nm, 5 nm, 8 nm, 10 nm, 15 nm, 25 nm, 30 nm, 40 nm or 50 nm, etc. The mean pore size of the anode material has a certain correlation with its surface density. Generally, a reduction in surface density leads to an excessive number of micropores on the surface of the anode material, resulting in a certain reduction of the mean pore size. The mean pore size of the anode material is within the above range, indicating that the anode material has a higher surface density, which is beneficial to reducing a reaction between the dissolved silicon particles and an electrolyte, and to reducing the gas production.

In some embodiments, the anode material contains silicon element accounting for a mass percentage of 20% to 60%. Specifically, the anode material contains silicon element accounting for a mass percentage of 20%, 25%, 30%, 40%, 45%, 50%, 55% or 60%, which is not limited herein. In the present disclosure, the mass percentage of the silicon element in the anode material is controlled within the above range, which improves the specific capacity of the anode material. In consideration of particle stability and specific capacity of the anode material, for example, the mass percentage of the silicon element in the anode material is 40% to 55%.

In some embodiments, an anode slurry prepared from the anode material has an average gas production of ≤1 mL/g for 1 day at 25°C, which may specifically be 1 mL/g, 0.8 mL/g, 0.6 mL/g, 0.5 mL/g, 0.4 mL/g, 0.3 mL/g, 0.2 mL/g or 0.1 mL/g, etc., or other value within the above range, which is not limited herein. The gas production of the anode material of the present disclosure is controlled within the above range, showing that most of the silicon material is relatively uniformly distributed in the pores of the matrix material, and a direct contact between the silicon material and an electrolyte is reduced, thereby reducing a side reaction of the dissolved silicon material and an electrolyte (i.e., silicon is hydrolyzed into silicate and hydrogen), and effectively reducing the gas production of the anode material. If the surface density of the anode material is not enough, the gas production of the anode material increases significantly.

In some embodiments, the anode material has a median particle size of 5 µm to 20 µm, which may specifically be 5 µm, 8 µm, 10 µm, 11 µm, 12 µm, 14 µm, 15 µm, 18 µm or 20 µm, etc., or other value within the above range, which is not limited herein. The median particle size of the anode material is within the above range, which ensures the time for lithiation and delithiation, allowing the anode material to achieve a state of quick and full lithiation, thereby ensuring the performance of charging and discharging of the lithium ion battery.

In some embodiments, the anode material has a particle size distribution satisfying 0.9≤(D₉₀-D₁₀)/D₅₀≤5, which specifically may be 0.9, 1.0, 1.5, 2.0, 2.5, 3.0, 3.5, 4, 4.5, or 5, etc., or other value within the above ranges, which is not limited herein. The particle size distribution of the anode material is within the above range, large particles with larger particle sizes and small particles with smaller particle sizes of the anode material can cooperate with each other, and the small particles fill pores between the large particles, so that the tap density of the anode material can be improved.

In some embodiments, a specific surface area of the anode material is 0.5 m²/g to 10 m²/g, which specifically may be 10 m²/g, 8.9 m²/g, 6.8 m²/g, 5.5 m²/g, 4.2 m²/g, 4 m²/g, 3 m²/g, 2.5 m²/g, 2 m²/g, 1 m²/g or 0.5 m²/g, etc., or other value within the above ranges, which are not limited herein. The specific surface area of the anode material affects the contact area between the anode material and the electrolyte. The specific surface area of the anode material being within the above range reduces the amount of lithium ions consumed by the SEI film formed in the lithium-ion battery during the initial charging and discharging, thereby reducing the irreversible capacity loss of the lithium-ion battery.

In some embodiments, the anode material has a compaction density of 0.8 g/cm³ to 1.3 g/cm³, which specifically may be 0.8 g/cm³, 0.9 g/cm³, 1.0 g/cm³, 1.1 g/cm³, 1.2 g/cm³ or 1.3 g/cm³, etc., or other value within the above range, which is not limited herein.

In some embodiments, the anode material has a tap density of 0.5 g/cm³ to 1.5 g/cm³, which specifically may be 0.5 g/cm³, 0.6 g/cm³, 0.7 g/cm³, 0.8 g/cm³, 0.9 g/cm³, 1.0 g/cm³, 1.1 g/cm³, 1.2 g/cm³, 1.3 g/cm³, 1.4 g/cm³ or 1.5 g/cm³, etc., or other value within the above range, which is not limited herein.

In some embodiments, the anode material has a powder conductivity of 0.1 S/cm to 2 S/cm under a pressure of 20 kN , which specifically may be 0.1 S/cm, 0.5 S/cm, 0.8 S/cm, 1.0 S/cm, 1.2 S/cm, 1.5 S/cm, 2 S/cm, etc., or other value within the above range, which is not limited herein. The powder conductivity of the anode material is controlled within the above range, showing that the exposed silicon material on the surface of the anode material is very little, and the silicon material is embedded in particles of the matrix material, which effectively improves the electrochemical performance of the anode material.

In a second aspect, embodiments of the present disclosure provide a preparation method of the anode material, including the following steps:
step S10, heating the matrix material to a deposition temperature of 200°C to 400°C and introducing a reaction gas by using a plasma-enhanced chemical vapor deposition process to obtain the anode material, where the reaction gas includes a silicon source gas and a diluent gas, a deposition pressure is 10 Pa to 200 Pa, an excitation power of the plasma is 20 W to 30 W, a vacuum degree is 3.0*10⁻⁴ Pa to 4.0*10⁻⁴ Pa, and a deposition time is 40 min to 60 min.

In some embodiments, the matrix material includes a carbon matrix, and the carbon matrix includes one or more of artificial graphite, natural graphite, amorphous carbon, activated carbon, mesocarbon microbeads, carbon nanotubes, carbon nanofibers, and graphene.

The carbon matrix selecting the above materials serves as a supporting framework and also has good conductivity to ensure conductivity of the anode material.

In some embodiments, in the carbon matrix, the micropores have a pore volume proportion of ≥80%, the mesopores have a pore volume proportion of ≤20%, and the macropores have a pore volume proportion of ≤1%. Specifically, the pore volume proportion of the micropores may be 80%, 85%, 89%, 90%, 92%, 95% or 98%, the pore volume proportion of the mesopores may be 20%, 18%, 17%, 15%, 14%, 12%, 10%, 8%, 6%, 5%, 2% or 1%, and the pore volume proportion of the macropores may be 1%, 0.8%, 0.7%, 0.5%, 0.3%, 0.2% or 0%. The volume proportions of the micropores, the mesopores, and the macropores in the carbon matrix are controlled within the above range, and the majority of the pores in the carbon matrix is the micropores, adjusting size of the silicon material formed by deposition, improving dispersion uniformity of the carbon matrix and the silicon material, improving volume expansion of the silicon material, and thus enhancing cycle stability of the anode material.

In some embodiments, the carbon matrix has a total pore volume of 0.4 cm³/g to 1.5 cm³/g, which specifically may be 0.4 cm³/g, 0.5 cm³/g, 0.6 cm³/g, 0.8 cm³/g, 1.0 cm³/g, 1.3 cm³/g, 1.4 cm³/g, or 1.5 cm³/g, etc., or other value within the above range, which is not limited herein.

In some embodiments, the carbon matrix has a specific surface area of 200 m²/g to 3000 m²/g, which may be 300 m²/g, 500 m²/g, 800 m²/g, 1000 m²/g, 1500 m²/g, 2000 m²/g, 2500 m²/g or 3000 m²/g, etc., or other value within the above range, which is not limited herein.

In some embodiments, in the carbon matrix, the pores with a pore size of 5 nm or less have a pore volume proportion of ≥90%. Specifically, the pores with a pore size of 5 nm or less have a pore volume proportion of 90%, 92%, 93%, 94%, 95%, 96%, 97%, 98% or 99%, etc. of all the pores, which is not limited herein. The pores of the carbon matrix are mainly composed of the pores with a pore size of 5 nm or less. The pore size distribution within this range facilitates adjusting size of the silicon material formed by deposition, improving dispersion uniformity of the carbon matrix and the silicon material, and reducing the segregation phenomenon of the silicon material.

In some embodiments, the matrix material includes a non-carbon matrix, and the non-carbon matrix includes at least one of a metal oxide, a silicide, a silicate, a phosphate, a titanate, and an aluminum borate.

In some embodiments, the metal oxide includes at least one of aluminum oxide, zirconium oxide, germanium dioxide, and manganese dioxide.

In some embodiments, the silicide includes at least one of silicon carbide and silicon nitride.

In some embodiments, the silicate includes at least one of cordierite, mullite, and zeolite.

In some embodiments, the phosphate includes at least one of aluminum phosphate, magnesium phosphate, calcium phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the titanate includes at least one of calcium titanate, iron titanate, lithium titanate, and barium titanate.

In some embodiments, the total pore volume, the specific surface area and the pore size distribution of the non-carbon matrix have similar definitions to that of the carbon matrix, which will not be repeated here.

In some embodiments, the non-carbon matrix is applied for accommodating the silicon material, which improves the overall particle strength of the anode material, especially during the coating and molding process of the anode material, improves the rolling resistance of the anode material, reduces the particle pulverization of the anode material, and improves the cycle capacity retention of the anode material.

In some embodiments, the reaction gas includes a silicon source gas and a diluent gas, and the silicon source gas includes at least one of silane, disilane, trisilane, and tetrasilane, which may be selected based on actual needs, thus is not limited herein.

In some embodiments, the plasma has a radio frequency power frequency of 13.56 MHz. It should be noted that the radio frequency power frequency of the plasma is generally a fixed value, which is a frequency parameter of the device itself. In other embodiments, the radio frequency power frequency of the plasma may also be 27.12 MHz, 40.68 MHz, etc., which is not limited herein.

In some embodiments, the diluent gas includes at least one of hydrogen, argon, nitrogen, and helium. For example, the diluent gas includes hydrogen and argon.

In some embodiments, the silicon source gas has a flow rate of 5 sccm to 50 sccm, which specifically may be 50 sccm, 45 sccm, 30 sccm, 25 sccm, 20 sccm, 15 sccm, 10 sccm or 5 sccm, etc., or other value within the above range, which is not limited herein.

In some embodiments, the diluent gas includes hydrogen gas, and the hydrogen gas has a flow rate of 20 sccm to 200 sccm, which specifically may be 20 sccm, 50 sccm, 60 sccm, 80 sccm, 100 sccm, 120 sccm, 150 sccm, 180 sccm or 200 sccm, etc., or other value within the above range, which is not limited herein.

In some embodiments, a volume ratio of the silicon source gas and the diluent gas is 100:(50 to 500), which may be 100:50, 100:100, 100:150, 100:200, 100:250, 100:300, 100:350, 100:400 or 100:500, etc., which is not limited herein. If the volume ratio of the diluent gas is too small, the silicon source gas rapidly decomposes and forms stable Si-Si bonds during the deposition process, where the deposition rate is too fast, leading to dispersion of a large number of formed Si-Si bonds on the surface of the matrix material, and blocking the pore structure on the surface of the matrix material, which is not conducive to depositing internally, causing most of the silicon material to deposit on the surface. If the volume ratio of the diluent gas is too large, the silicon material tends to transform from a first phase to a second phase, where the silicon material in the second phase has an anisotropy volume expansion, thereby exacerbating the expansion effect of the anode material.

Taking the diluent gas including hydrogen gas and the silicon source gas being silane SiH₄ as an example. During the vapor deposition, the reaction mechanism is shown as the following formula (1): 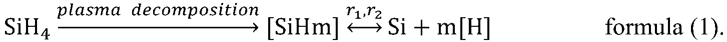 during the vapor deposition, H atoms bombard the surface of the matrix material, so that more Si-H bonds react with hydrogen, leading the Si-H bonds to be broken to form Si-Si bonds, or H atoms promote weaker Si-Si bonds to be broken to form strong and regular Si-Si bonds, that is, to transform from the first phase to the second phase or a crystal phase.

As SiH₄ concentration increases, the positive reaction rate r₁ increases, and the deposition rate is too fast, so that the deposited Si atoms do not have enough time to form strong and stable bonds, and the silicon material is mainly in the first phase. As SiH₄ concentration decreases, H₂ concentration increases, so that hydrogen is decomposed to more [H] atoms under the action of plasma, and the existence of [H] atoms is beneficial to increasing the reverse reaction rate r₂, thereby improving the crystallization ratio and reducing the deposition rate.

Taking the diluent gas including argon and the silicon source gas being silane SiH₄ as an example. During the vapor deposition, the reaction mechanism is shown as the following formulas (2) to (5):

Ar + SiH₄ → SiH₃ + H + Ar (*k =* 1.4*10⁻¹⁰ cm³/s) formula (2)

Ar + SiH₃ → SiH₂ + H + Ar (*k =* 1.0*10⁻¹⁰ cm³/s) formula (3)

Ar + SiH₂ → SiH + H + Ar (k = 1.0*10⁻¹⁰ cm³/s) formula (4)

Ar + SiH → Si + H + Ar *(k* = 1.0*10⁻¹⁰ cm³/s) formula (5)

Specifically, when at a higher concentration of argon, the silicon unit with lower hydrogen generated by plasma excitation is easier to nucleate than SiH₃. On the other hand, a quenching reaction occurs when the metastable argon unit collides with the matrix material, transferring energy to the matrix material, which is beneficial to the formation of the silicon material in the second phase. The benefit of the formation of the silicon material in the second phase in the matrix material slightly increases the deposition rate of the silicon material. However, the increase of the argon concentration reduces the concentration of the silicon source gas in the reaction gas, leading a large amount of the metastable argon atoms to undergo a secondary reaction as shown in formulas (3) to (5) with the silicon source gas to generate the silicon units with lower hydrogen (SiH₂, SiH, Si, and mainly SiH₂), which tend to nucleate in the gas phase to form large-particle dust and to be lost, thereby reducing the deposition rate. While, when the argon concentration is too low, the deposition rate slightly increases with the decrease of the argon dilution concentration, because the metastable argon atoms and the silane molecules undergo a quenching reaction as shown in formula (2) to promote decomposition of the silane to generate SiH₃, this leads to a slightly increased growth rate of Si, thereby increasing the tap density of the anode material. Thus, the argon gas as a diluent gas is beneficial to the formation of the silicon material in the second phase, but it is difficult to replace hydrogen gas as the diluent gas.

In an embodiment, the deposition temperature is 200°C to 400°C, which specifically may be 200°C, 250°C, 280°C, 300°C, 350°C, 380°C or 400°C, etc., or other value within the above range, which is not limited herein. If the deposition temperature is too low, the ionized Si atoms or atom groups have a relatively low surface activity, and thus are difficult to find low-energy sites for bonding and crystallization, resulting in a poor deposition efficiency. If the deposition temperature is too high, Si atoms in the matrix material at a higher temperature have a relatively large diffusion free energy to be able to form stable bonds. The higher temperature is also beneficial to release of [H] atoms and decomposition of active groups in the above formula (1), thereby improving the deposition rate of the silicon material. But, the excessively high deposition temperature causes the silicon material in the first phase to be transformed into the silicon material in the second phase, resulting in a higher crystallization rate of the silicon material in the anode material, which is not beneficial to improving cycle stability of the anode material.

In some embodiments, the deposition pressure is 10 Pa to 200 Pa, which specifically may be 10 Pa, 20 Pa, 30 Pa, 50 Pa, 80 Pa, 100 Pa, 120 Pa, 150 Pa or 200 Pa, etc., or other value within the above range, which is not limited herein.

In some embodiments, the plasma power is 20 W to 30 W or 90 W to 100 W, which specifically may be 20 W, 25 W, 30 W, 90 W, 92 W, 95 W or 100 W, etc., or other value within the above range, which is not limited herein.

When the deposition pressure falls within the range of 10 Pa to 200 Pa, the crystallization degree of the silicon material first increases and then decreases as the plasma power increases. As shown in formula (1), when the plasma power falls within the range of 20 W to 30 W, as the plasma power increases, there are more high-energy electrons present in the reaction chamber, leading to more SiH₄ to decompose to generate [SiHm] and to generate more high-energy hydrogen. The [H] plasma also has an enhanced etching ability on the silicon material, causing the weak Si-Si bonds to break and recombine to form strong and regular Si-Si. With the increase of the generated [SiHm] by decomposition, the energy increases, which promotes crystallization of the silicon material. An excessively high degree of crystallization of the silicon material causes an exacerbated expansion effect of the anode material, as well as an aggravated cracking of particles of the anode material during cycling. When the plasma power is further increased to 90 W to 100 W, the decomposition of more SiH₄ causes the deposition rate to be too fast, the ionized Si atoms or atom groups do not have enough time to form bonds at the site with the lowest energy, which is not conducive to their crystallization. The high-energy hydrogen atoms etch away the attached silicon atom to reform vaporized [SiHm] groups, which is not conducive to crystallization of the silicon material, thereby also reducing the crystallization degree of the silicon material. Therefore, in the present disclosure, controlling the plasma power within the above range controls the area proportions of the regions where the silicon materials in the first phase and the second phase are present in the deposited silicon material, allowing the anode material to have both high cycle stability and high capacity.

In some embodiments, the deposition time is 40 min to 60 min, which specifically may be 40 min, 45 min, 50 min, 55 min, 60 min, etc., or other value within the range, which may be selected based on actual needs, thus is not limited herein.

Further, the preparation method further includes: step S20, coating a product obtained by deposition with a coating material to obtain the anode material.

In some embodiments, the coating material includes a carbon material. A carbon layer formed by the carbon material has a thickness of 1 nm to 300 nm. The carbon layer reduces dissolution of the silicon material, thereby reducing the gas production of the reaction between the dissolved silicon material and the electrolyte, which facilitates maintaining stability of the particle structure of the anode material during cycling, and improving charging and discharging performance of the anode material.

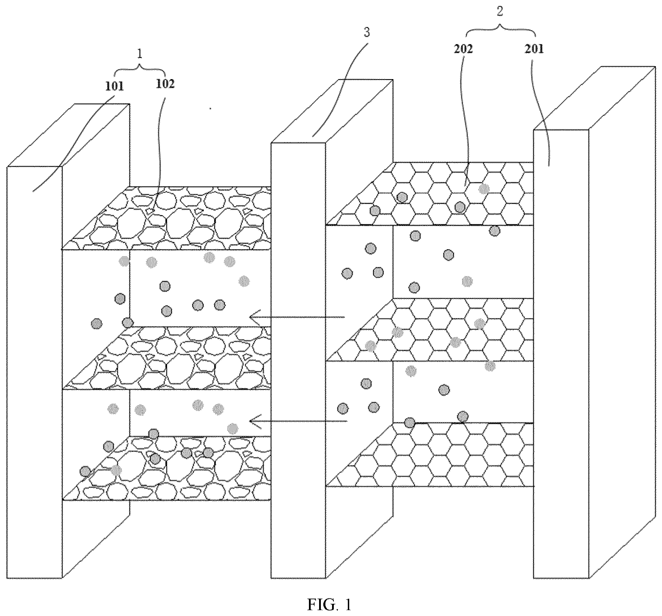

In a third aspect, embodiments of the present disclosure further provide a battery. FIG. 1 is a schematic diagram of a battery in discharging state provided by embodiments of the present disclosure. As shown in FIG. 1, the battery includes a housing and an electrode assembly. The electrode assembly includes a cathode plate 1, an anode plate 2, and a separator 3 disposed between the cathode plate 1 and the anode plate 2. The electrode assembly is a laminated structure, which is formed by alternately sequentially laminating the cathode plate 1, the separator 3 and the anode plate 2. In other embodiments, the electrode assembly is a rolling structure, which is formed by sequentially laminating the cathode plate, the separator and the anode plate and then rolling.

In some embodiments, the cathode plate 1 includes a cathode current collector 101 and a cathode active layer 102 disposed on at least one surface of the cathode current collector 101.

In some embodiments, the cathode current collector 101 adopts an aluminum foil or a nickel foil, etc., or is any composite current collector described in the prior art, such as, but not limited to, the current collector formed by combining the above conductive foil (aluminum foil or nickel foil, etc.) and a polymer substrate. The cathode active layer 102 includes a cathode active material, and the cathode active material includes a compound that reversibly intercalate and de-intercalate metal ions.

In some embodiments, the cathode active material includes a lithium transition metal composite oxide, a sodium transition metal composite oxide, etc. The lithium transition metal composite oxide contains lithium and at least one element selected from cobalt, manganese and nickel.

In some embodiments, the cathode active material includes, but is not limited to, at least one of lithium cobalt oxide (LiCoO₂), lithium nickel manganese cobalt ternary material (NCM), lithium manganate (LiMn₂O₄), lithium nickel manganate (LiNi_{0.5}Mn_{1.5}O₄), or lithium iron phosphate (LiFePO₄).

In some embodiments, the anode plate 2 includes an anode current collector 201 and an anode active material layer 202 disposed on at least one surface of the anode current collector.

In some embodiments, the anode current collector 201 adopts at least one of copper foil, nickel foil, stainless steel foil, titanium foil, carbon-based current collector, etc., or is any composite current collector described in the prior art, such as, but not limited to, a current collector formed by combining the above conductive foil and a polymer substrate. The anode active material layer 202 includes an anode material, and the anode material is the anode material according to the first aspect or the anode material prepared by the preparation method.

The battery provided by an embodiment of the present disclosure has the advantages of high capacity, high initial effect, long cycle service life, excellent rate performance and low expansion. The battery is a lithium-ion battery, a sodium-ion battery, a solid electrolyte battery, etc., which is not limited herein.

Those skilled in the art will understand that the preparation method of the battery described above is only an embodiment. Other methods commonly used in the art may be employed on the basis of not departing from the scope of the present disclosure.

The present disclosure is further illustrated by the following several examples. The embodiments of the present disclosure are not limited to the following specific examples. Variations may be made appropriately without changing the scope of the independent claims.

### Test Methods:

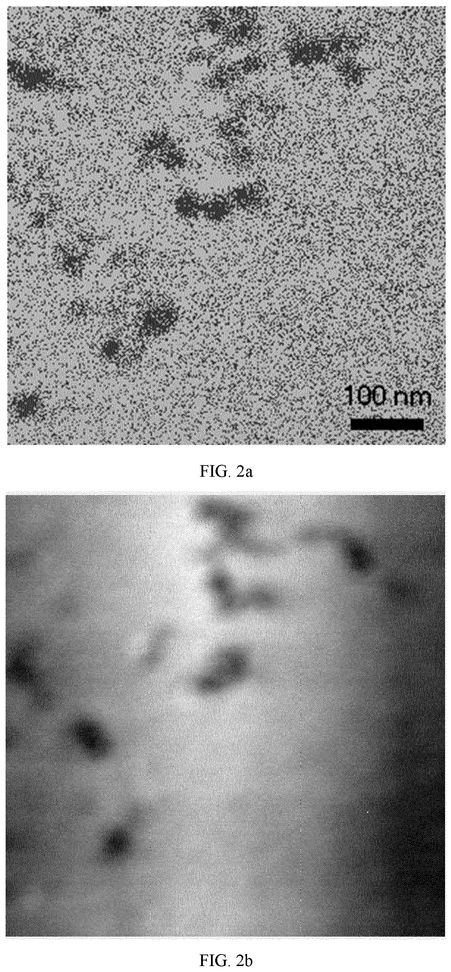

1. Precession Electron Diffraction Test of the Anode Material:
   WWFI-T105 precession electron diffraction instrument purchased from NanoMEGAS, Belgium is adopted and installed on a double spherical aberration corrected transmission electron microscope (TEM). During collecting the PED mapping, the PED pattern is quickly obtained point by point across the region of interest (600*600 nm) with an electron beam precession angle of 0.6°, a beam diameter of 5 nm, and a step size of 4 nm, and finally the results are calibrated offline. Further, the cross-section analysis and visualization are performed by ASTM MapViewer software and Channel 5 software package to automatically identify and index the electron diffraction patterns, to automatically complete the crystal orientation map and the crystal phase distribution map. FIG. 2a is a precession electron diffraction pattern of an anode material provided by Example 3 of the present disclosure. FIG. 2b is a processed image of a precession electron diffraction pattern of an anode material provided by Example 3 of the present disclosure. In the figures, the white area represents the first phase, and the black area represents the second phase, and the area proportion of the first phase and the second phase is obtained by area fitting and summarization.
2. XRD Test of the Anode Material:
   the anode material is prepared into sheets and tested by X-ray diffraction analyzer with a fitting range of 26° to 30°. The sample is scanned and fitted to obtain FWHM (peak width at half-height) and half-diffraction angle of the anode material at 28.4°±0.5°. The grain size of the silicon material is calculated by the following formula:
   c = 0.89λ/FWHM*cos θ, where c is the grain size of the silicon material in nm; λ is wavelength of the radiation, copper target is adopted in the present disclosure, λ = 0.154056 nm; FWHM is the peak width at half-height; and θ is the half-diffraction angle.
3. Test Methods of Pore Size and Pore Volume Proportion:
   the tests are performed by using ASAP2460 device of Micromeritics, USA. The pore volume V is calculated in a pore size range of 17Å to 3000Å by using the BJH Desortation cumulative volume of pores model.
   Micropores and mesopores analysis are performed by Micromeritics ASAP 2460. At a liquid nitrogen temperature, the equilibrium adsorption capacity of nitrogen gas on the surface of an object is related to pore size and other characteristics thereof. Combined with the variation in adsorption capacity with relative pressure during the adsorption process, various models can be fitted to calculate the pore size. The nitrogen adsorption method is adopted for testing micropores and mesopores, and the mercury porosimeter is adopted for testing macropores, and they also provide the pore size distribution, mean pore size, and other information. The specific test is that: a certain amount of sample is weighed and put into a special bubble tube for the specific surface area, purged with nitrogen gas for a certain time at 300°C in degassing station, cooled to room temperature after degassed. The sample is weighed for its actual mass, and then the special bubble tube filling with the sample is mounted to the specific surface area and pore size analyzer, and measured for the specific surface area and pore size of the sample after the mass of the sample is input: below 0.01, quantitative gas injection, 20 mL/g; 0.01 or more, fixed-point gas injection, where ranging from 0.01 to 0.10, with an interval of 0.01, 0.01 to 0.20, with an interval of 0.02, 0.20 to 1.0, with an interval of 0.05; degassing, ranging from 1.00 to 0.15, with an interval of 0.05.
4. Test Method of the Specific Surface Areas of the Anode Material and the Anode Material with the silicon material removed:
   the specific surface areas are measured by TriStar 3000 BET surface area and pore size analyzer purchased from Micrometrics, USA.
5. Gas Production Test:
   carboxymethyl cellulose (CMC) is dispersed in water at a 1.4% mass ratio to prepare a gel. After the dispersion is uniform, 10 g of the gel is mixed with 10 g of the anode material to form a slurry. The slurry is placed in an aluminum plastic film bag, and the mass of the slurry is recorded. Then, the bag is sealed to form a sealed aluminum plastic film bag.
   The sealed aluminum plastic film bag is fixed at the bottom of a container and submerged in water, and the volume of the aluminum plastic film bag is recorded. After a fixed time (24 h), the volume of the aluminum plastic film bag is recorded again. The gas production of the silicon anode material is calculated based on the volume change of the aluminum plastic film bag, in mL/g.
6. Test of Mass Percentage of Silicon in the Anode Material:
   taking the matrix material as a carbon matrix for example. The sample is burned in an oxygen atmosphere by a box type atmosphere furnace (model: SA2-9-17TP), in which silicon and silicon monoxide undergo reactions to form silicon dioxide, and carbon burn to convert into carbon dioxide to be discharged. The mass percentage of silicon in the anode material is calculated by weighing. Specific method is that:
   1.0000g to 1.2000g of the anode material is weighed as a sample and placed into a corundum crucible with an accuracy of 0.1 mg, and 2 parallel samples are weighed for each sample. The temperature rise program of the muffle furnace is set as that: the initial temperature is 30°C, which is raised to 400°C in 30 minutes and maintained at 400°C for 60 minutes for thoroughly removing water vapor and low-boiling-point volatile components; then the temperature is continuously raised to 900°C in 60 minutes and maintained at 900°C for 120 minutes for removing carbon and other volatile impurities; then the temperature is continuously raised to 1100°C in 30 minutes and maintained at 1100°C for 480 minutes for fully oxidizing silicon or silicon monoxide into silicon dioxide; finally, it is set to be stopped, that is, heating is turned off, and cooling is started.
7. Test of Mass Percentage of Carbon in the Anode Material:
   taking the matrix material as a carbon matrix for example. The sample is burned at a high-temperature in oxygen-enriched state by the infrared carbon sulfur analyzer G4 ICARUS HF/CS-i of Bruker, German/Eltra, German, in which the contained carbon element is oxidized into carbon dioxide. The generated gas enters the infrared detector along with the carrier gas. The content of the carbon element is obtained by quantitatively calculating the change of the infrared absorption wavelength intensity of the carbon dioxide signal.
8. Test of Powder Conductivity:
   the conductivities of powder at five pressure points of 4, 8, 12, 16 and 20 KN are measured by an MCP-PD51 powder conductivity meter of Mitsubishi Chemical, Japan, and then the resistivity of the powder is automatically calculated by a computer. The specific test method is that: a sample to be tested is put into a circular mold cavity, in which four equal-distance probes numbered by 1, 2, 3 and 4 are fixed and arranged in a straight line on a ceramic wafer in the center of the bottom of the mold cavity. A cylindrical top column, having the same diameter as that of the mold cavity, equipped with a ceramic probe is used to apply a pressure to the sample in the mold cavity filled with the sample, so that four probe electrodes on the ceramic wafer at the bottom of the sample in the mold cavity closely contact and are gradually compressed. A potential difference V is generated between the No. 2 and 3 probes through applying a current I between the No. 1 and 4 probes. Through a dynamic four-probe method, the resistance of the circular block-shaped material under different pressures (pressures) is tested, so that the resistivity and conductivity of the powder sample under different pressures (pressures) is accurately calculated, and a relation curve between the pressure (pressures) and the conductivity is obtained. The instrument is used to measure the resistance of the powder, and then the conductivity and resistivity of the powder are automatically calculated by a computer.
9. Test of Tap Density of the Anode Material:
   DAT-6-220 tap density meter of Quantachrome, USA is used. A sample with a prescribed mass is placed in the measuring cylinder, and vibrated in prescribed times (3000 times for a normal test). The tap density is obtained by reading the volume in the measuring cylinder after tap and calculating.
10. Test of Compaction Density of the Anode Material:
   CARVER 4350.22 powder compaction density meter of MYCRO, USA is used. A sample with a prescribed mass m is placed in a mold, and applied with a 1.0T pressure for 30s. Then, its thickness is measured after the pressure is released, and the compaction density is calculated.
11. Test Method of Particle Size and Particle Size Distribution:
   The test is performed by a Malvern laser particle size analyzer (Mastersizer 3000). The volume weighted cumulative particle size distribution is measured by the laser diffraction method for the particle size distribution test, where D₁₀ represents the particle size corresponding to a cumulative particle size distribution percentage of the powder reaching 10%, D₅₀ represents the particle size corresponding to a cumulative particle size distribution percentage of the powder reaching 50%, and D₉₀ represents the particle size corresponding to a cumulative particle size distribution percentage of the powder reaching 90%.
12. Test of Electrical Performance:
   A button battery is tested by the following method: an anode slurry is prepared by mixing an anode material, conductive carbon black, and polyacrylic acid copolymer (abbreviated as PPA) in a mass ratio of 70:15:15, then coated on a copper foil and dried to prepare an anode plate. A button battery is assembled in a glove box filled with Ar by further adopting a metal lithium sheet as a counter electrode. The button battery is subjected to a charging and discharging test at a current density of 0.1C and within a charging and discharging voltage range of 0.01V to 5V to obtain an initial specific reversible capacity and an initial coulombic efficiency of the button battery.

An anode slurry is prepared by mixing an anode material, a graphite mixture, carbon black Super-P, conductive graphite KS-6, carboxymethyl cellulose CMC, and styrene butadiene rubber SBR in a mass ratio of 92:2:2:2:2, then coated on a copper foil and dried to prepare an anode plate. The proportions of Si-C and graphite in the Si-C composite material and the graphite mixture are determined by their initial specific reversible capacities and their required capacities. A button battery is assembled in a glove box filled with Ar by further adopting a metal lithium sheet as a counter electrode. The button battery is subjected to a charging and discharging test repeatedly for 50 cycles at a current density of 1C and within a charging and discharging voltage range of 0.01V to 5V to obtain a capacity retention and a thickness expansion rate of the electrode plate of the battery after 50 cycles.

### Example 1

(1) a porous carbon matrix was placed in a reaction chamber of a plasma-enhanced chemical vapor deposition furnace, and heated to a deposition temperature of 300°C. The reaction chamber was maintained at a vacuum degree P₀ of 3.5*10⁻⁴ Pa, with a radio frequency power frequency of 13.56 MHz and a plasma power of 25W applied; and
(2) silane and hydrogen were introduced for vapor deposition with a silane flow rate of 20 sccm, a hydrogen flow rate of 100 sccm, a deposition pressure of 133.3 Pa, and a deposition time of 50 min, to obtain the anode material.

The relevant test data of Examples and Comparative Examples were measured according to the test method described above, with the specific process parameters shown in Table 1. The test results are shown in Table 2 to Table 5 below:

**Table 1. Preparation Process Parameters of the Anode Material**

| Sample | Matrix Material | Deposition Temperature /°C | Plasma Power /W | Vacuum Degree P₀/Pa | Hydrogen Flow /sccm | Silane Flow /sccm | Deposition Pressure /Pa | Deposition Time /min |
|---|---|---|---|---|---|---|---|---|
| Example 1 | Carbon Matrix | 300 | 25 | 3.5*10⁻⁴ | 100 | 20 | 133.3 | 50 |
| Example 2 | Carbon Matrix | 200 | 25 | 3.5*10⁻⁴ | 100 | 20 | 133.3 | 50 |
| Example 3 | Carbon Matrix | 400 | 25 | 3.5*10⁻⁴ | 100 | 20 | 133.3 | 50 |
| Example 4 | Carbon Matrix | 300 | 20 | 3.5*10⁻⁴ | 50 | 20 | 133.3 | 50 |
| Example 5 | Carbon Matrix | 300 | 30 | 3.5*10⁻⁴ | 80 | 20 | 133.3 | 50 |
| Example 6 | Carbon Matrix | 300 | 90 | 3.5*10⁻⁴ | 120 | 20 | 133.3 | 50 |
| Example 7 | Carbon Matrix | 300 | 95 | 3.5*10⁻⁴ | 150 | 20 | 133.3 | 50 |
| Example 8 | Carbon Matrix | 300 | 100 | 3.5*10⁻⁴ | 200 | 20 | 133.3 | 50 |
| Example 9 | Carbon Matrix | 300 | 25 | 3.5*10⁻⁴ | 100 | 5 | 133.3 | 50 |
| Example 10 | Carbon Matrix | 300 | 25 | 3.5*10⁻⁴ | 100 | 50 | 133.3 | 50 |
| Example 11 | Carbon Matrix | 300 | 25 | 3.5*10⁻⁴ | 100 | 20 | 180 | 40 |
| Example 12 | Carbon Matrix | 300 | 25 | 3.5*10⁻⁴ | 100 | 20 | 15 | 60 |
| Example 13 | Zeolite | 300 | 25 | 3.5*10⁻⁴ | 100 | 20 | 133.3 | 50 |
| Example 14 | Aluminum Phosphate | 300 | 25 | 3.5*10⁻⁴ | 100 | 20 | 133.3 | 50 |
| Example 15 | Barium Titanate | 300 | 25 | 3.5*10⁻⁴ | 100 | 20 | 133.3 | 50 |
| Example 16 | Alumina | 300 | 25 | 3.5*10⁻⁴ | 100 | 20 | 133.3 | 50 |
| Example 17 | Silicon Carbide | 300 | 25 | 3.5*10⁻⁴ | 100 | 20 | 133.3 | 50 |
| Example 18 | Carbon Matrix | 100 | 25 | 3.5*10⁻⁴ | 100 | 20 | 133.3 | 50 |
| Comparative Example 1 | Carbon Matrix | 500 | 25 | 3.5*10⁻⁴ | 100 | 20 | 133.3 | 50 |
| Comparative Example 2 | Carbon Matrix | 300 | 25 | 3.5*10⁻⁴ | 100 | 3 | 133.3 | 50 |
| Comparative Example 3 | Carbon Matrix | 300 | 60 | 3.5*10⁻⁴ | 100 | 20 | 133.3 | 50 |
| Comparison Example 4 | Carbon Matrix | 300 | 25 | 3.5*10⁻⁴ | 50, Argon | 20 | 133.3 | 50 |

**Table 2. Parameters of the Anode Material**

| Sample | The area proportion % of the silicon material in the first phase/the silicon material in the second phase (100% in total) | Grain Size c of Silicon | Powder Conduct ivity ρ (S/cm) | Mass Percent age of Elemen t C (%) | Mass Percent age of Elemen t Si (%) | Specific Surface Area (m²/g) | Compac tion Density (g/cm³ ) | Tap Density (g/cm³) | Gas Production at Normal Temperatu re for 24 h (mL/g) |
|---|---|---|---|---|---|---|---|---|---|
| Example 1 | 85/15 | 0.5 | 1.25 | 47 | 52 | 5.3 | 1.10 | 1.02 | 0.5 |
| Example 2 | 90/10 | 0.33 | 1.0 | 48 | 51 | 5.0 | 1.12 | 1.03 | 0.33 |
| Example 3 | 75/25 | 0.83 | 1.5 | 46 | 53 | 5.9 | 1.13 | 1.01 | 0.67 |
| Example 4 | 88/12 | 0.45 | 1.23 | 47 | 52 | 5.4 | 1.11 | 1.02 | 0.51 |
| Example 5 | 80/20 | 0.56 | 1.29 | 47 | 52 | 5.3 | 1.09 | 1.03 | 0.5 |
| Example 6 | 91/9 | 0.23 | 0.87 | 44 | 54 | 5.2 | 1.09 | 1.01 | 0.49 |
| Example 7 | 94/6 | 0.2 | 0.8 | 44 | 54 | 5.2 | 1.12 | 1.03 | 0.51 |
| Example 8 | 96/4 | 0.19 | 0.76 | 44 | 54 | 5.1 | 1.10 | 1.02 | 0.5 |
| Example 9 | 70.5/29.5 | 0.95 | 1.63 | 49 | 50 | 5.1 | 1.13 | 1.03 | 0.38 |
| Example 10 | 99.5/0.5 | 0.02 | 0.88 | 45 | 54 | 5.8 | 1.11 | 1.05 | 0.75 |
| Example 11 | 81/19 | 0.54 | 1.32 | 47 | 52 | 5.3 | 1.09 | 1.02 | 0.5 |
| Example 12 | 97/3 | 0.12 | 0.69 | 47 | 52 | 5.2 | 1.11 | 1.01 | 0.51 |
| Example 13 | 85/15 | 0.51 | 1.0 | 5.3 | 46 | 9.7 | 1.03 | 1.03 | 0.3 |
| Example 14 | 85/15 | 0.50 | 0.97 | 5.7 | 46 | 9.7 | 0.95 | 1.05 | 0.4 |
| Example 15 | 85/15 | 0.52 | 1.02 | 5.7 | 45 | 9.3 | 1.04 | 1.01 | 0.35 |
| Example 16 | 85/15 | 0.51 | 0.99 | 5.2 | 46 | 9.1 | 1.02 | 1.02 | 0.4 |
| Example 17 | 85/15 | 0.50 | 0.97 | 5.1 | 48 | 9.2 | 1.01 | 1.03 | 0.43 |
| Example 18 | 95/5 | 0.18 | 0.75 | 53 | 45 | 4.9 | 1.11 | 1.05 | 0.25 |
| Comparative Example 1 | 40/60 | 2 | 3.5 | 50 | 44 | 10.2 | 1.12 | 1.02 | 1.02 |
| Comparative Example 2 | 55/45 | 1.5 | 2.75 | 51 | 46 | 3.8 | 1.10 | 1.04 | 0.2 |
| Comparative Example 3 | 60/40 | 1.42 | 2.5 | 45 | 52 | 5.4 | 1.10 | 1.03 | 0.49 |
| Comparison Example 4 | 62/38 | 1.39 | 2.4 | 50 | 49 | 5.6 | 1.12 | 1.01 | 0.48 |

**Table 3. Parameters of the Anode Material**

| Sample | Mean Particle Size D50 (µm) | (D90-D10)/D50 | Pore Volume (cm³/g) | Mean Pore Size (nm) | Micropores Proportion (%) | Mesopores Proportion (%) | Macropores Proportion (%) | Micropores Volume: Mesopores Volume |
|---|---|---|---|---|---|---|---|---|
| Example 1 | 12.5 | 3.0 | 0.051 | 25.2 | 5 | 90 | 5 | 1:18 |
| Example 2 | 12.4 | 3.1 | 0.059 | 17.0 | 8 | 88 | 4 | 1:11 |
| Example 3 | 12.6 | 2.9 | 0.048 | 33.5 | 3 | 91 | 6 | 3:91 |
| Example 4 | 12.5 | 3.0 | 0.05 | 25.1 | 5 | 91 | 4 | 5:91 |
| Example 5 | 12.4 | 2.9 | 0.051 | 25.3 | 6 | 90 | 4 | 1:15 |
| Example 6 | 12.5 | 2.9 | 0.065 | 37.5 | 2 | 91 | 7 | 2:91 |
| Example 7 | 12.4 | 2.9 | 0.067 | 37.6 | 2 | 92 | 6 | 1:46 |
| Example 8 | 12.4 | 3.0 | 0.068 | 37.6 | 1 | 92 | 7 | 1:92 |
| Example 9 | 12.5 | 3.1 | 0.057 | 12.8 | 8 | 89 | 3 | 8:89 |
| Example 10 | 12.6 | 3.0 | 0.056 | 10.4 | 4 | 91 | 5 | 4:91 |
| Example 11 | 12.5 | 3.0 | 0.051 | 25.2 | 5 | 90 | 5 | 1:18 |
| Example 12 | 12.6 | 3.1 | 0.05 | 25.1 | 4 | 90 | 6 | 2:45 |
| Example 13 | 6.9 | 3.6 | 0.018 | 2.78 | 6 | 87 | 7 | 2:29 |
| Example 14 | 5.2 | 3.8 | 0.019 | 2.99 | 7 | 85 | 8 | 7:85 |
| Example 15 | 4.3 | 1.9 | 0.017 | 2.76 | 10 | 80 | 10 | 1:8 |
| Example 16 | 6.3 | 1.4 | 0.021 | 2.98 | 9 | 81 | 10 | 1:9 |
| Example 17 | 4.8 | 1.6 | 0.054 | 2.79 | 8 | 83 | 9 | 8:83 |
| Example 18 | 12.5 | 2.8 | 0.059 | 25.0 | 6 | 88 | 6 | 3:44 |
| Comparative Example 1 | 12.4 | 3.0 | 0.123 | 7.5 | 15 | 79 | 6 | 15:79 |
| Comparative Example 2 | 12.6 | 3.1 | 0.132 | 6.6 | 13 | 78 | 9 | 1:6 |
| Comparative Example 3 | 12.5 | 2.9 | 0.058 | 25.1 | 6 | 91 | 3 | 6:91 |
| Comparison Example 4 | 12.4 | 3.0 | 0.061 | 24.9 | 7 | 91 | 2 | 7:91 |

**Table 4. the Anode Material with Si Particles Removed**

| Sample | Micropores Proportion (%) | Mesopores Proportion (%) | Macropores Proportion (%) | Pore volume (cm³/g) | Specific Surface Area (m²/g) | Volume Proportion of the Pore with a Pore Size of 5 nm or less in the Total Pore Volume |
|---|---|---|---|---|---|---|
| Example 1 | 90 | 9.5 | 0.5 | 0.95 | 1600 | 95 |
| Example 2 | 90.2 | 9.4 | 0.4 | 0.96 | 1623 | 94 |
| Example 3 | 90.1 | 9.3 | 0.6 | 0.94 | 1632 | 96 |
| Example 4 | 90 | 9.2 | 0.7 | 0.95 | 1642 | 94 |
| Example 5 | 90.8 | 9.0 | 0.2 | 0.94 | 1598 | 95 |
| Example 6 | 90.6 | 9.1 | 0.3 | 0.96 | 1589 | 96 |
| Example 18 | 90.3 | 9.6 | 0.1 | 0.95 | 1579 | 96 |
| Comparative Example 1 | 89.5 | 9.7 | 0.8 | 0.96 | 1569 | 95 |
| Comparative Example 2 | 89.3 | 9.8 | 0.9 | 0.94 | 1624 | 94 |
| Comparative Example 3 | 90.5 | 9.5 | 0.5 | 0.95 | 1597 | 93 |
| Comparison Example 4 | 90.7 | 9.0 | 0.3 | 0.96 | 1625 | 95 |

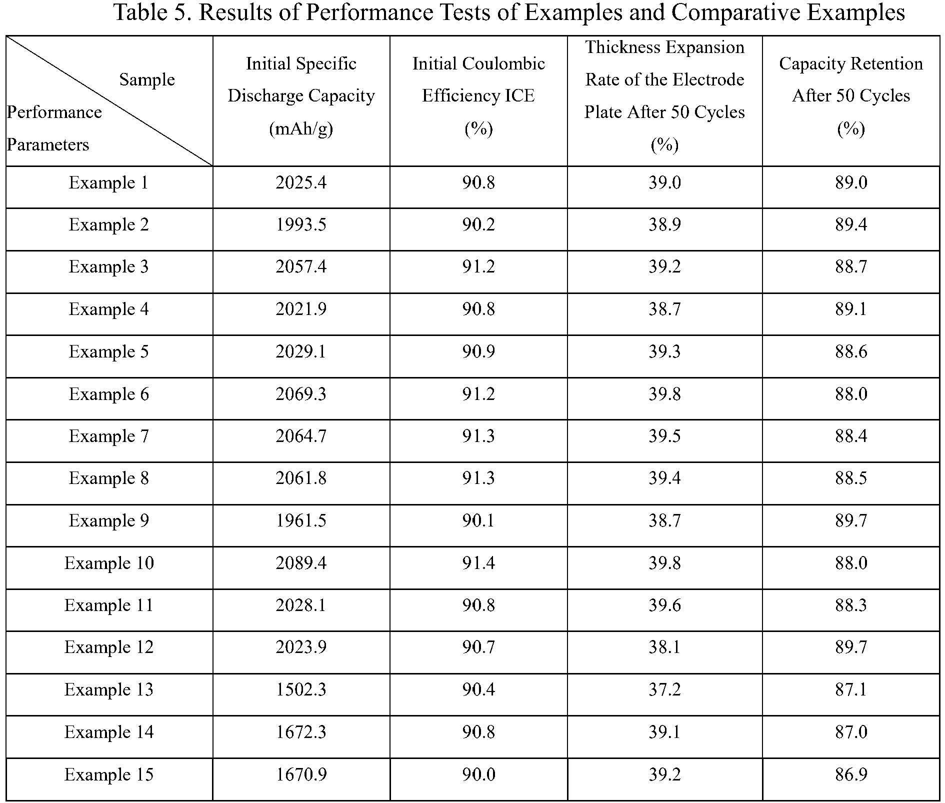

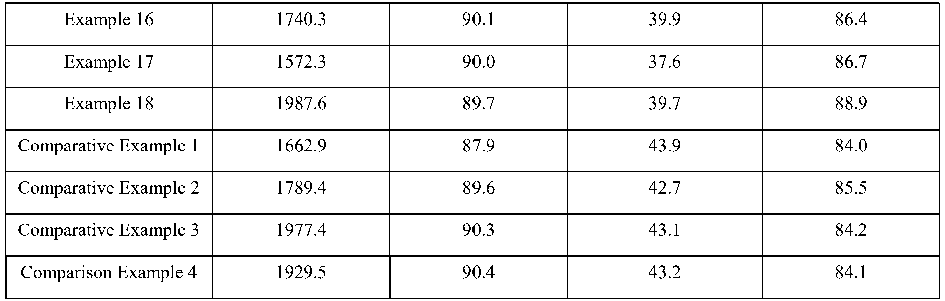

From the test data of Examples 1 to 18, it can be seen that by controlling the area proportion A of the region with the silicon material in the first phase present to be ≥70% and the area proportion B of the region with the silicon material in the second phase present to be 0< B ≤30%, the silicon material in the anode material is mainly in the first phase, so that the structural stability brought about by the silicon material in the first phase more greatly utilized, allowing the anode material to have more stable capacity and lower expansion effect. Moreover, the matrix material with pores is adopted for further alleviating volume expansion of the silicon material, thus effectively alleviating the volume expansion of the silicon material during cycling, and reducing particle pulverization of the anode material. Therefore, cycle performance of the anode material is comprehensively improved.

From the test data of Comparative Example 1, it can be seen that the deposition temperature was raised to 500°C, resulting in that more silicon material in the first phase was transformed into the silicon material in the second phase, the area proportion A of the region with the silicon material in the first phase present was 40%, and the area proportion B of the region with the silicon material in the second phase present was 60%. The area proportions of the region with the silicon material in the first phase and the second phase present of the anode material in Comparative Example 1 are not within the above ranges, which is not conducive to improving the cycle stability of the anode material. Moreover, the expansion rate of the anode material in Comparative Example 1 is greatly increased compared with that of the anode material in Example 1.

From the test data of Comparative Example 2, it can be seen that the silane flow was too low, resulting in that the area proportion A of the region with the silicon material in the first phase present was 55%, and the area proportion B of the region with the silicon material in the second phase present was 45%. The area proportions of the region with the silicon material in the first phase and the second phase present of the anode material in Comparative Example 2 are not within the above ranges, leading to that the expansion rate of the anode material in Comparative Example 2 is greatly increased compared with that of the anode material in Example 1, and the capacity retention of the anode material is greatly decreased.

From the test data of Comparative Example 3, it can be seen that the plasma power was 60 W, resulting in that some of the silicon material in the first phase was transformed into the silicon material in the second phase due to etching of the silicon material by a large amount of [H] plasma, and in the anode material, the area proportion of the region with the silicon material in the first phase present was 60%, and the area proportion of the region with the silicon material in the second phase present was 40%. The area proportions of the region with the silicon material in the first phase and the second phase present of the anode material in Comparative Example 3 are not within the above ranges, leading to that the expansion rate of the anode material in Comparative Example 3 is greatly increased compared with that of the anode material in Example 1, and the capacity retention of the anode material is greatly decreased.

From the test data of Examples 1 and 11 to 12, it can be seen that adjusting the deposition pressure and the deposition time during silicon deposition adjusted the area proportion of the region with the silicon material in the first phase present in the anode material. As long as the proportions of the region with the silicon material in the first phase present and the region with the silicon material in the second phase present are controlled within the above range, the anode material has a more stable capacity and a lower expansion effect.

From the test data of Examples 1 and 12 to 17, it can be seen that different matrix materials had less influence on the silicon material formed by deposition. But, the different matrix materials have different electrical conductivities, thus slightly affect the powder conductivity of the anode material and affect the specific capacity of the anode material.

From the test data of Example 1 and Comparative Example 4, it can be seen that when the diluent gas was argon with a flow rate of 50 sccm, in the anode material, some of the silicon material in the first phase tended to be transformed into the silicon material in the second phase due to the presence of argon, resulting in that in the anode material, the area proportion of the region with the silicon material in the first phase present was 62%, and the area proportion of the region with the silicon material in the second phase present was 38%. The area proportions of the region with the silicon material in the first phase and the second phase present of the anode material in Comparative Example 4 are not within the above ranges, which is not conducive to improving the cycle stability of the anode material.

The structure, features and effects of the present disclosure are described in detail according to the examples shown in the illustrations above. The above description is only preferred embodiments of the present disclosure, but the present disclosure is not limited to the scope of implementation shown in the illustrations. Any changes made according to the concept of the present disclosure, or modified into equivalent embodiments with equivalent changes, which still do not extend beyond the spirit covered by the specification and the drawings, should be within the scope of the present disclosure.

## Claims

1. An anode material, **characterized in that** the anode material comprises a matrix material and a silicon material, and at least some of the silicon material is present in the matrix material, wherein the silicon material involves a first phase and a second phase,
wherein the anode material is measured by a precession electron diffraction method that:
based on a region with the silicon material present, a region with the silicon material in the first phase present has an area proportion A of A ≥70%, and a region with the silicon material in the second phase present has an area proportion B of 0<B≤30%.

2. The anode material according to claim 1, **characterized in that** the matrix material has pores, and at least some of the silicon material is present in the pores of the matrix material.

3. The anode material according to claim 2, **characterized in that** an anode material with the silicon material removed satisfies at least one of the following features:
(1) the anode material with the silicon material removed has micropores, wherein the micropores have a pore volume proportion of ≥80%;
(2) the anode material with the silicon material removed has mesopores, wherein the mesopores have a pore volume proportion of ≤20%;
(3) the anode material with the silicon material removed has macropores, wherein the macropores have a pore volume proportion of ≤1%;
(4) the anode material with the silicon material removed has a total pore volume of 0.4 cm³/g to 1.5 cm³/g;
(5) the anode material with the silicon material removed has a specific surface area of 200 m²/g to 3000 m²/g; and
(6) in the anode material with the silicon material removed, pores with a pore size of 5 nm or less have a pore volume proportion of ≥90%.

4. The anode material according to claim 1, **characterized in that** the matrix material comprises a carbon matrix, and the carbon matrix comprises one or more of artificial graphite, natural graphite, amorphous carbon, activated carbon, mesocarbon microbeads, carbon nanotubes, carbon nanofibers, and graphene.

5. The anode material according to claim 1, **characterized in that** the matrix material comprises a non-carbon matrix, and the non-carbon matrix comprises at least one of a metal oxide, a silicide, a silicate, a phosphate, a titanate, and an aluminum borate.

6. The anode material according to any one of claims 1 to 5, **characterized in that** in an XRD pattern of the anode material, the anode material has a diffraction peak at 28.4°±0.5°, and the silicon material has a grain size c of ≤1 nm.

7. The anode material according to any one of claims 1 to 5, **characterized in that** the anode material satisfies at least one of the following features:
(1) the anode material has a total pore volume of 0.001 cm³/g to 0.1 cm³/g;
(2) the pores of the anode material have a mean pore size of 0.4 nm to 50 nm;
(3) the anode material contains micropores, wherein the micropores have a pore volume proportion of ≤10%;
(4) the anode material contains mesopores, wherein the mesopores have a pore volume proportion of ≥80%;
(5) the anode material contains macropores, wherein the macropores have a pore volume proportion of ≤20%; and
(6) the anode material contains micropores and mesopores, wherein a ratio of a pore volume of the micropores and a pore volume of the mesopores is (1 to 50):(50 to 99).

8. The anode material according to any one of claims 1 to 5, **characterized in that** an anode slurry prepared from the anode material has an average gas production of ≤1 mL/g for 1 day at 25°C.

9. The anode material according to any one of claims 1 to 5, **characterized in that** the anode material satisfies at least one of the following features:
(1) the anode material has a median particle size D₅₀ of 5 µm to 20 µm; and
(2) the anode material has a particle size distribution satisfying 0.9≤(D₉₀-D₁₀)/D₅₀≤5;(3) the anode material has a specific surface area of 0.5 m²/g to 10 m²/g.

10. The anode material according to any one of claims 1 to 5, **characterized in that** the anode material has a compaction density of 0.8 g/cm³ to 1.3 g/cm³.

11. The anode material according to any one of claims 1 to 5, **characterized in that** the anode material has a tap density of 0.5 g/cm³ to 1.5 g/cm³.

12. The anode material according to any one of claims 1 to 5, **characterized in that** the anode material has a powder conductivity of 0.1 S/cm to 2 S/cm under a pressure of 20 kN.

13. The anode material according to any one of claims 1 to 5, **characterized in that** the anode material contains silicon element accounting for a mass percentage of 20% to 60%.

14. The anode material according to any one of claims 1 to 5, **characterized in that** the anode material has a specific surface area of 0.5 m²/g to 10 m²/g.

15. A battery, **characterized in that** the battery comprises the anode material according to any one of claims 1 to 14.
